Europäisches Patentamt

European Patent Office

Office européen des brevets

(11) Publication number: **0 424 178 A2**

# EUROPEAN PATENT APPLICATION

(21) Application number: **90311525.1**

(51) Int. Cl.5: **G06F 1/16**

(22) Date of filing: **19.10.90**

(30) Priority: **20.10.89 JP 271722/89**

(43) Date of publication of application:
**24.04.91 Bulletin 91/17**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Sasaki, Katumaru, c/o Intellectul**
**Property Div.**
**Toshiba Corporation, 1-1 Shibaura 1-chome**
**Minato-ku, Tokyo 105(JP)**

(74) Representative: **BATCHELLOR, KIRK & CO.**
**2 Pear Tree Court Farringdon Road**
**London EC1R 0DS(GB)**

(54) Portable electronic apparatus.

(57) A portable electronic apparatus has a displaceable handle assembly; a tilt leg which tilts a keyboard which forms part of the apparatus; two disk drive units located one above the other; a rigid wall partition which separatres the function keys from the character keys of the keyboard; an expansion card storing compartment in which a card can be electrically secured and a removable cover plate which covers a recessed portion of the apparatus.

FIGURE 1

## PORTABLE ELECTRONIC APPARATUS

This invention relates to a portable electronic apparatus, such as a laptop computer or a portable word processor.

A portable computer disclosed, for example, in U. S. Patent No. 4864523 has a base unit and a display unit pivotally connected to the base unit. The base unit has a keyboard. The display unit is able to rotate between a closed position where the display unit covers the keyboard and an open position where the kryboard is exposed and is able to be operated.

The portable computer has a U-shaped handle asembly. The handle assembly has a pair of legs slidably connected to the computer and a handle interconnecting with the legs. The handle assembly is able to slide between a stored position where the handle contactsthe computer and the projected position where the handle is gripped by an opetrator. The computer has a pair of leg storing portions. The legs are almost wholly stored in the respective leg storing portions in the stored position. The computer which has a U-shaped handle assembly is necessarily large because the computer has two leg storing portions.

The computer has a floppy disk drive (FDP) and a hard disk drive (HDD). The FDD and HDD are disposed side-by-side on a same inner surface in the computer. Consequently, the width of the computer is not able to be smaller than the sum of the widths of the FDD and HDD.

The computer has a tilt assembly which is slidably moved between a tilting position where the keyboard is tilted forwardly and a non-tilting position where the keyboard is not tilted. The tilt assembly is big because the tilt assembly is rotated between the tilting position and the non-tilting position.

The display unit has an outer case and an inner case. The outer case is coupled to the inner case by a screw. The screw is covered by a flexible resin cover. The resin cover is removably fixed to the display unit, but the resin cover is hard to remove from the display unit because the engagement of the resin cover and the display unit is tough.

The keyboard of the computer has character keys and function keys. The character keys and function keys are separated by a partition wall. When the computer is small, the partition wall is thin. This permits the wall to bend and contact the keys, thus preventing them from being operated.

The computer has an expansion card storing compartment. After an expansion card is installed in the compartment, a resin cover covers the compartment. Consequently, the expansion card is not screened from electromagnetic waves.

According to a first aspect of the invention, a portable electronic apparatus comprises a base unit and a handle assembly which is displaceable between a storage position and a carrying position for carrying the apparatus, characterised in that the handle assembly comprises an elongate leg portion pivotally secured at one end to the base unit and a handle connected to the leg portion and displaceable relative thereto in the direction of the length of the leg portion, said handle assembly being pivotable between the carrying position and the storage position where the leg portion and the handle are stored in respective recesses in the base unit.

According to a second aspect of the invention, a portable electronic apparatus comprises a base unit having a keyboard and at least one tilt leg assembly which, when in use, tilts the keyboard forwardly, characterised in that the or each tilt leg assembly includes a tilt leg which is displacable between a first position in which it projects from the underside of the base unit to tilt the keyboard and a second position in which it is mainly in a storing compartment in the base unit and the keyboard is not tilted; fixing means for fixing the tilt leg in each of the positions and release means for releasing the fixing means from the tilt leg to allow the tilt leg to be displaced from one position to the other.

According to a third aspect of the invention, a portable electronic apparatus comprises a base unit and first and second disk drives within the base unit, characterised in that one of the disk drives is mounted within a housing structure which, in turn, is mounted in the base unit and the other disk drive is mounted on the housing structure so that the disk drives are one above the other.

According to a fourth aspect of the invention, a portable electronic apparatus comprises a base unit having a keyboard with function keys and character keys separated by a wall, characterised in that the keyboard is mounted on the base unit by means of a frame which is secured to the base unit and overlies the keyboard, said frame having said wall which has engaging claws which engage with corresponding engaging grooves in the keyboard when the frame overlies the keyboard so that the wall serves as a rigid partition between the function keys and the character keys.

According to a fifth aspect of the invention, a portable electronic apparatus comprises a base unit defining an expansion card storing compartment which has a removable cover, characterised in that the wall of the compartment and at least the inner surface of the cover is electrically conducting and the cover carries an electrically conducting spring which, in use, contacts an electrically conducting portion on an expansion card in the compartment to hold the expansion card firmly in the compartment and to connect the electrically conducting portion on the card to the electrically conducting wall of the storage compartment.

According to a sixth aspect of the invention, a portable electronic apparatus has a recessed portion arranged to be covered by a removable cover member, characterised in that the recessed portion provides a substantially flat surface having two elongate slots therein and the removable cover has two claws extending therefrom, said claws being arranged to enter said respective slots in a direction substantially normal to the plane of the flat surface and then be moved in a direction parallel to the plane of the flat surface so that the cover closes off the recessed portion, one of the claws having a hook portion which hooks into its slot to lock the cover in the closed off position, said claw being mounted on an elastically deformable portion of the cover whereby a user can deform said portion to release the hook portion from its slot and permit the cover to be removed from the recessed portion.

In order that the invention may be more readily understood, it will now be described, by way of example only, with reference to the accompanying drawings, in which:-

Figure 1 is a perspective view of a laptop computer according to an embodiment of the invention;

Figure 2 is a perspective view of the laptop computer when a display unit is set in a closed position, a handle assembly is set in a projecting postion and a tilt leg assembly is set in a stored position;

Figure 3 is a perspective view for explaining a movement of a handle of the handle assembly;

Figure 4 is a sectional view taken along line II-II of Figure 3;

Figure 5 is a perspective bottom view of Figure 2;

Figures 6A-6C are sectional views for explaining a movement of the handle assembly;

Figure 7 is an exploded perspective view of a tilt leg assembly;

Figures 8A-8C are sectional views for explaining a movement of the tilt leg assembly;

Figure 9 is an exploded perspective view of a disk drive assembly;

Figure 10 is a perspective view of a front top cover;

Figure 11 is a top view of a keyboard;

Figure 12 is a perspective view of a card storing portion and a storing portion cover;

Figure 13 is a top view of an expansion card;

Figure 14 is a sectional view for explaining a storing condition of the expansion card;

Figure 15 is a perspective view of a display leg and a screw cover; and

Figures 16A-16C are sectional views for explaining a movement of a claw of the screw cover.

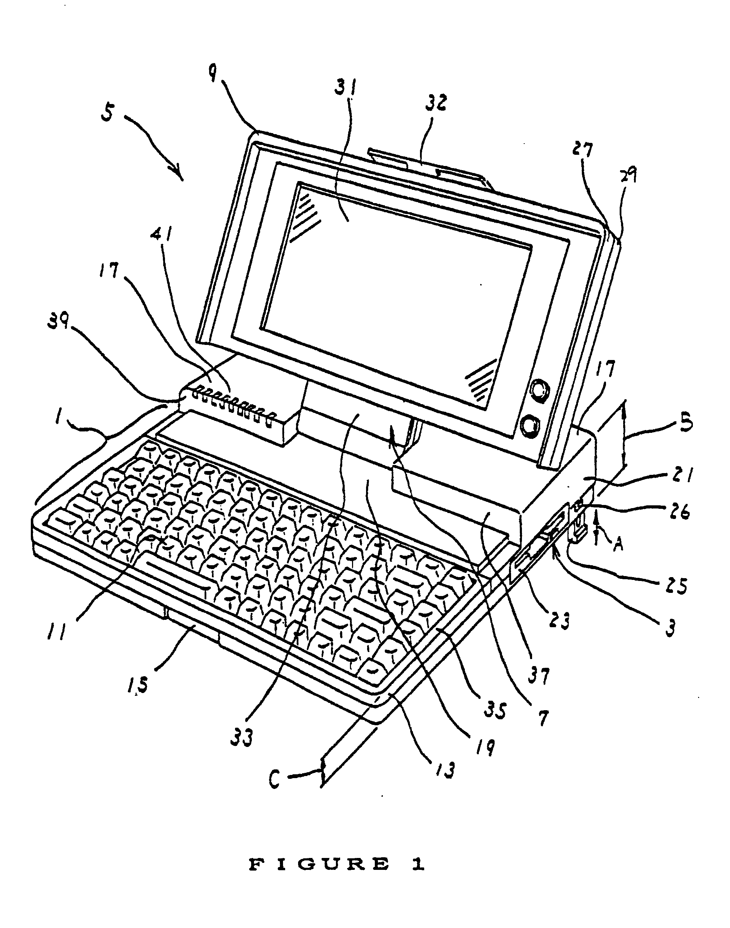

Figure 1 is a perspective view of a laptop computer.

A laptop computer 5 has a base unit 3 and a display unit 9. Base unit 3 has a front portion 1. A keyboard 11 and a front top cover 13 are fixed on the front portion 1. A handle assembly 15 is pivotally connected to a front end of the base unit 3. Base unit 3 has a rear top surface 17 and a display leg mounting surface 19. A side wall 21 of base unit 3 has a floppy disk drive (FDD) 23 and a tilt leg release switch 26. A rear portion of a bottom surface of base unit 3 has a tilt leg 25. Tilt leg 25 is slid in a direction of arrow A. Base unit 3 has a right center wall 37 and a left center wall 39. Light electroluminescence devices (LEDs) are mounted in a corner between left center wall 39 and rear top surface 17. Display unit 9 has a display leg 7. Display leg 7 is mounted on mounting surface 19. Display unit 9 is pivotally connected to base 3 by display leg 7. Display unit 9 has an inner case 27, an outer case 29, display surface 31, a display latch claw 32 and a screw cover 33. Screw cover 33 is removably fixed on display leg 7. A height B between rear top surface 17 and the bottom surface of base unit 3 is higher than a height C between a front top surface 35 and the bottom surface.

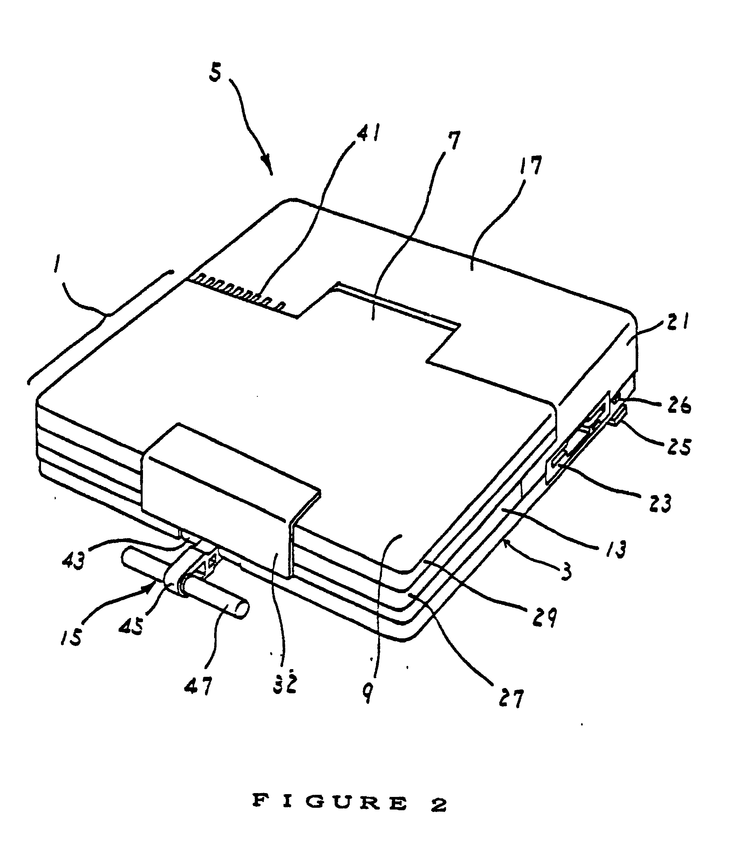

Figure 2 is a perspective view of the laptop computer when the display unit 9 is set in a closed position, the handle assembly 15 is set in a projecting position and the tilt leg 25 is set in a stored position.

Display unit 9 rotates between an open position (shown in Figure 1) for exposing and operating keyboard 11 and a closed position (shown in Figure 2) for covering keyboard 11. When display unit 9 is set in the closed position, an outer surface of outer case 29 and rear top surface 17 are maintained at a common height level. Tilt leg 25 slides between a tilting position (shown in Figure 1) for tilting the keyboard 11 forwardly and a stored position (shown in Figure 2). Handle assembly 15 has a handle pivot portion 43, a leg portion 45 which is fixed to handle pivot portion 43 and handle 47 which is slidably connected to leg portion 45. Handle assembly 15 rotates between a storage position (shown in Figure 1) for storing handle assembly 15 and a projecting position (shown in Figure 2) for gripping handle portion 47.

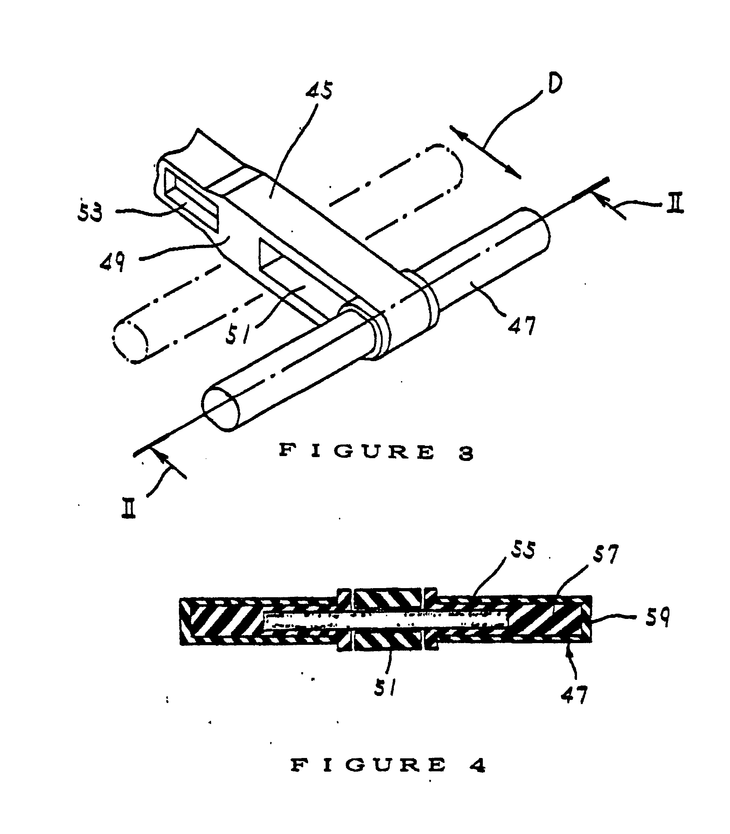

Figure 3 is a perspective view for explaining movement of the handle assembly.

A side surface 49 of leg portion 45 has a rectangle hole 51 and an engaging groove 53. Handle portion 47 is slidably connected in rectangle hole 51. Handle portionm slides between a handle gripping position (shown by a continuous line) and handle storing position (shown by a dotted line).

Figure 4 is a sectional view taken along line II-II of Figure 3.

Handle portion 47 has a metal core portion 55, resin portions 57 for connecting metal core portion in rectangle hole 51 and rubber portions 59 covering resin portions 57.

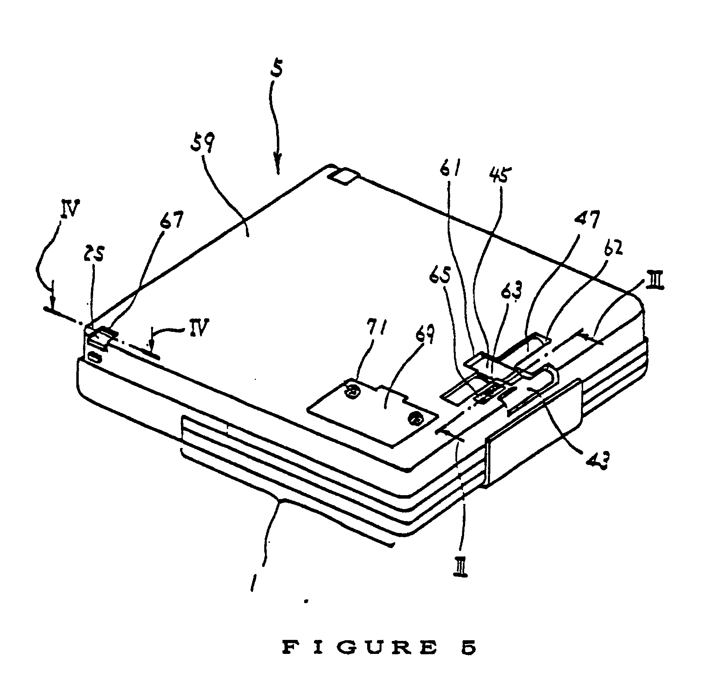

Figure 5 is a perspective bottom view of Figure 2.

A bottom surface 59 of base unit 3 has a leg storing recess 61 and a handle storing recess 62 in a front end. Handle 47 is stored in recess 62 in the storage position. Bottom surface 59 has a latch storing portion 65 and release latch 63 stored in portion 65. A rear end of bottom surface 59 has a pair of tilt leg storing portions 67. A card storing portion cover 69 is fixed on bottom surface 59 by screw 71.

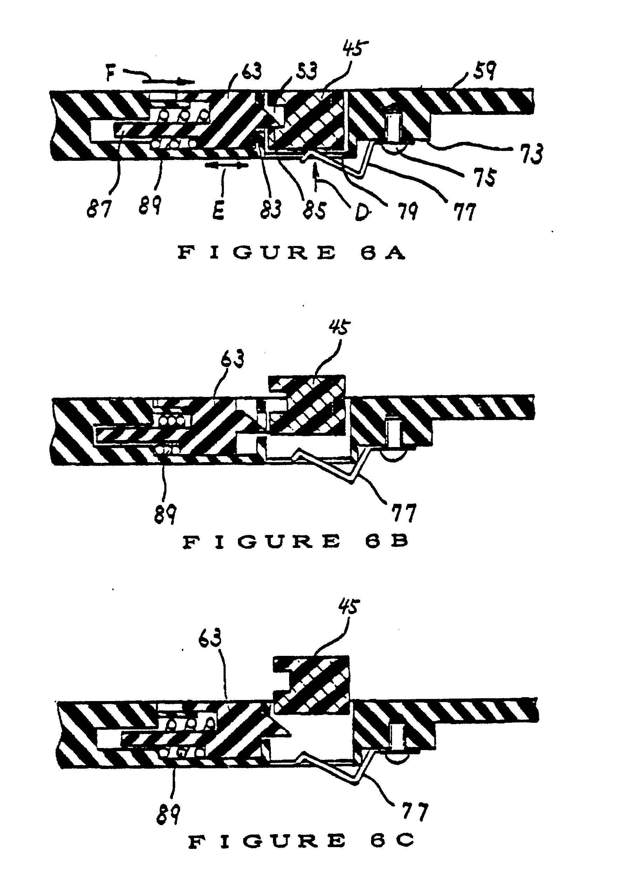

Figures 6A-6C are sectional views for explaining a movement of the handle assembly.

Figure 6A is a sectional via taken along line III-III of Figure 5. One end of a flat spring 77 is fixed on an inner surface 73 of base unit 3 by a screw 75. Inner surface 73 has an opening 79. The other end of flat spring 77 is inserted in the opening and pushes leg portion 45 in the direction of arrow D. Latch storing portion 65 has a side opening 83. One end of release latch 63 has a latch cow 83. Latch claw 83 is inserted in side opening 83. Latch claw 83 is engaged with engaging groove 53. Release latch 63 is slidable in the direction of arrow E. The other end of release latch 63 has a spring hold 87. A coil spring 89 is wound around spring holds 87. Coil spring 89 pushes release latch 63 in a direction of arrow F. When an operator slides release latch 63, as shown in Figure 6B, latch claw 83 is released from engaging groove 53. Coil spring is contracted. When latch claw 83 is released, leg portion 45 is projected from leg storing recess 61 by the force of flat spring 77. When the operator releases switch 63, as shown in Figure 6C, release switch 63 returns the position shown in Figure 6A by the force of cob spring 89.

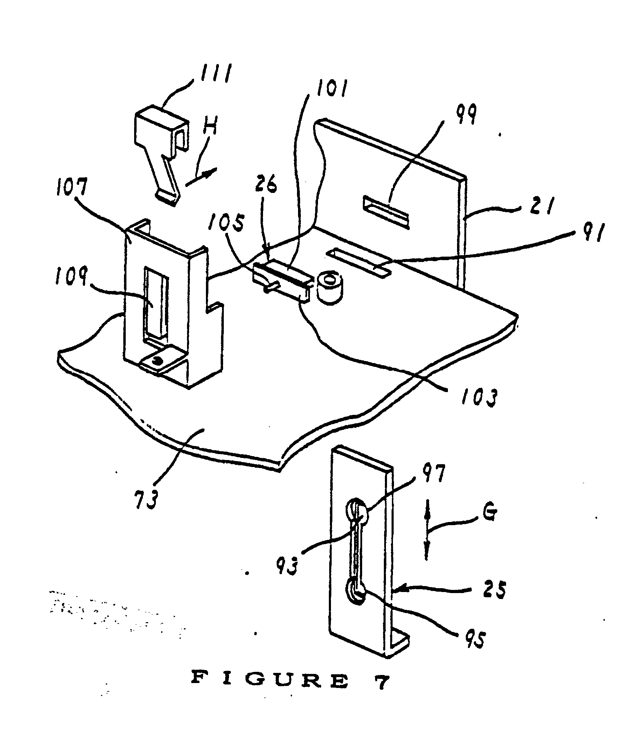

Figure 7 is an exploded perspective view of tilt leg assembly.

Bottom surface 59 has a slit 91 in which tilt leg 25 is inserted. Tilt leg has a slit 93. One end of slit 93 has a first groove 95 for fixing tilt leg 25 in the stored position. The other end of slit 63 has a second groove 97 for fixing tilt leg 25 in the tilting position. Side wall 21 has a slit 99 for inserting release switch 26. Tilt leg release switch 26 has a head portion 101, a stopper portion 103 and a projecting portion 105, Head portion 101 is inserted in slit 99 and projects from side wall 21. Stopper portion 103 prevents switch 26 from falling out from slit 99. A leg holder 107 slidably supports tilt leg 25 in the direction of an arrow G. Leg holder 107 includes an elastic portion 109 having an engaging portion which is engaged in first and second grooves 95, 97. A flat spring 111 is fixed on leg holder 107 and pushes the engaging portion in a direcion of an arrow H. Leg holder 107 is fixed on inner surface 73 of base unit 3.

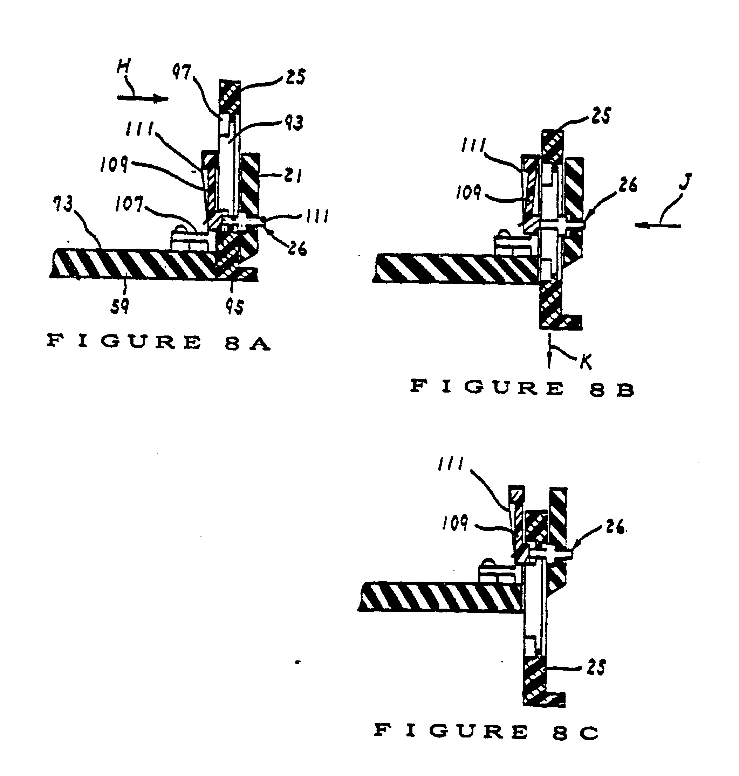

Figures 8A-8C are sectional views for explaining a movement of the tilt leg assembly.

Figure 8A is a sectional view taken along line IV-IV of Figure 5. When tilt leg 25 is stored in the storing position, the engaging portion of elastic portion 109 is engaged with first groove 95. Tilt leg 25 is fixed in the storing position because the engaging portion is pushed in a direction of an arrow H by flat spring 111. When an operator pushes head portion 101 of release switch 26 in a direction of an arrow J, as shown in Figure 8B, projecting portion 105 pushes the engaging portion of elastic portion 109 and the engaging portion is released from first groove 95. When the engaging portion is released, tilt leg 25 is able to be slid in a direction of an arrow K. When the operator slides tilt leg 25 in the direction of the arrow K. the engaging portion of elastic portion 109 is inserted in and engaged with second groove 97 by spring 111.

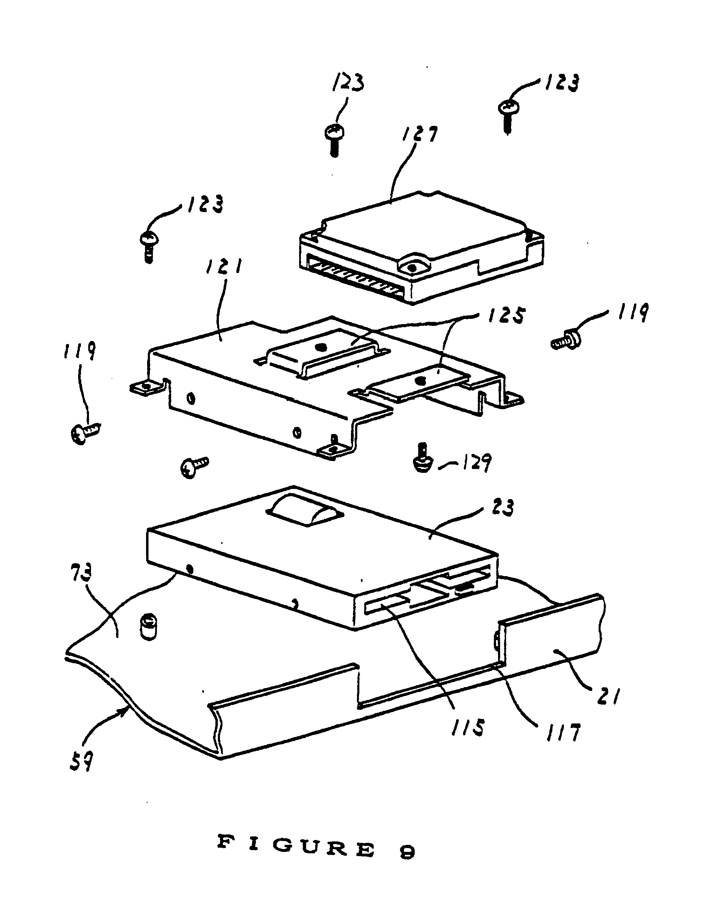

Figure 9 is an exploded perspective view of a disk assembly.

Side wal 121 of base unit 3 has a hole 117 for exposing a disk inserting portion 115 of a 3.5 inch FDD 23 which is fixed in drive housing 121 by screws 119. Drive housing 121 is fixed on inner surface 73 by screws 123. Drive housing 121 has a pair of hard disk mounting surfaces 125. A 2.5 inch hard disk drive (HDD) 127 is fixed on mounting surfaces 125 by screw 129. FDD 23 and HDD 127 are mounted on the same drive housing 121. Consequently, the disk assembly is compact.

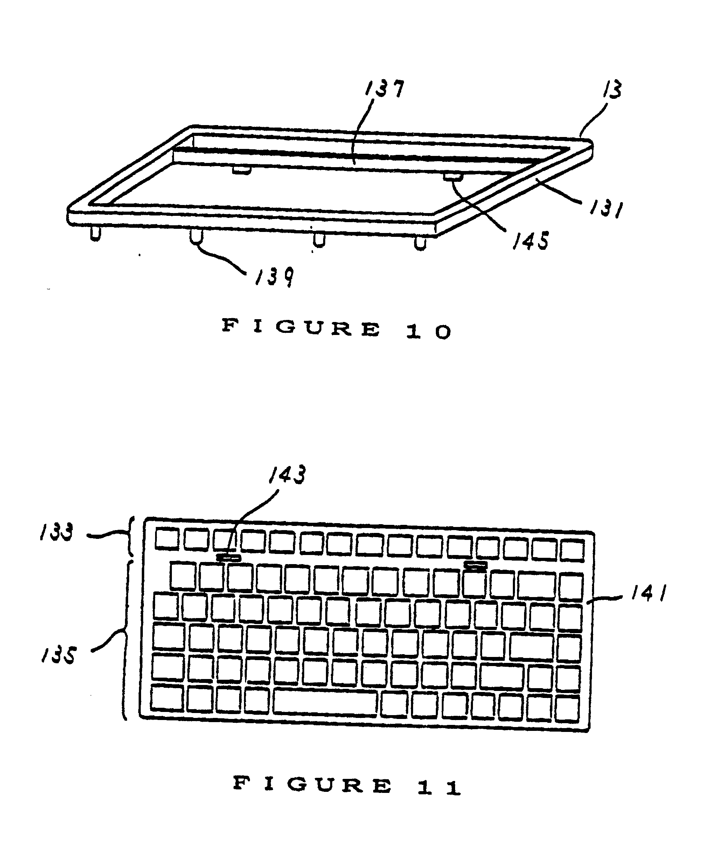

Figure 10 is a perspective view of a front top cover and Figure 11 is a top view of a keyboard.

Front top cover 13 includes an outer frame 131 having screw engaging bosses 139 and a partition wall 137, for separating function keys 133 and character keys 135 of keyboard 11, having a pair of engaging claws 145. A plate 141 of keyboard 11 has a pair of engaging grooves 143. When keyboard 11 and front top cover 13 are assembled on base unit 3, engaging claws 145 are engaged with engaging grooves 143. Consequently, even though partition wall is thin, partition wall is prevented from bending.

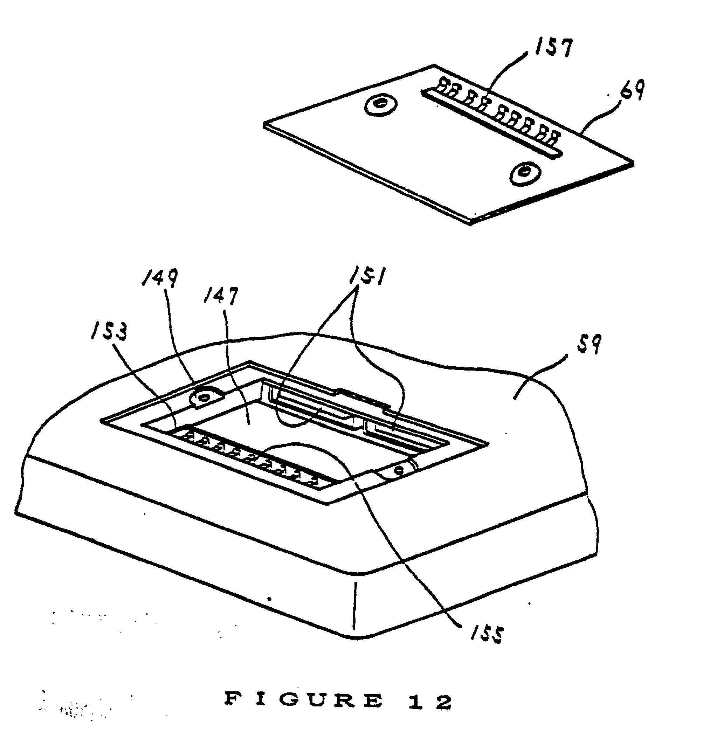

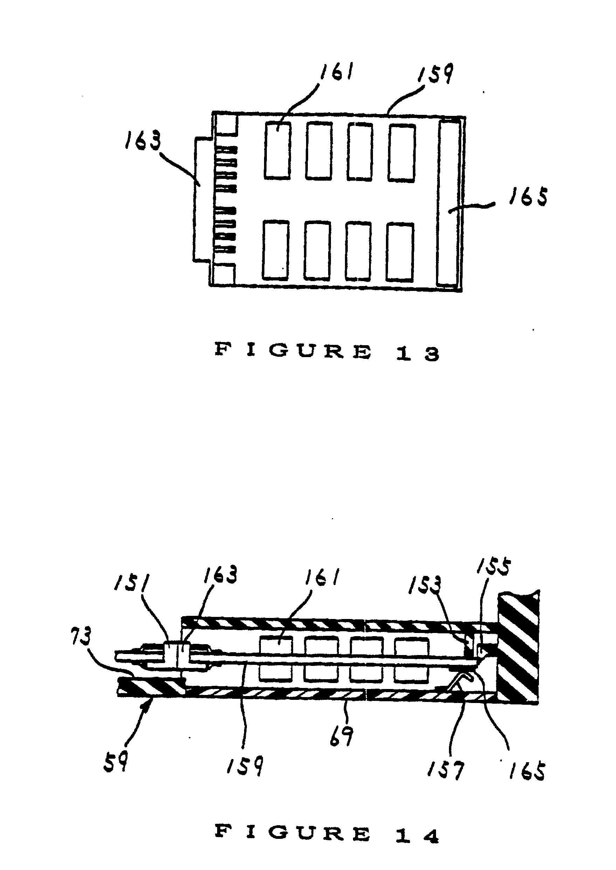

Figure 12 is a perspective view of a card storing compartment in the base and Figure 13 is a top view of an expansion card.

Bottom surface 59 of base unit 3 has an expansion card storing compartment 147 the walls of which are coated by an electric conducting material. One side of storing compartment 147 has connectors 151 fixed on the inner surface of base unit 3. Opposite side of storing portion 147 has a card mounting wall 153 and stopper claws 155 for preventing an expansion card from slipping. The compartment has a cover 69 with a flat metal spring 157 fixed on its inner surface. Cover 69 is an electric conductor. An expansion card 159 has a connector 163 arranged to connect with connectors 151, expansion memories 161 and an electric conducting plate 165.

Figure 14 is a sectional view for explaining a storing condition of the expansion card.

When expansion card is stored in storing compartment 147 and cover 69 is fixed on bottom surface 59 by screws 71, spring 157 is contacted to conducting plate 165, and pushes card 159 on card mounting wall 153. Inner surface 73 is coated by the electric conducting material. Consequently, expansion card is electrically connected to base unit 3 through plate 165, spring 157, cover 69 and screws 71 and the expansion card is electrically shielded.

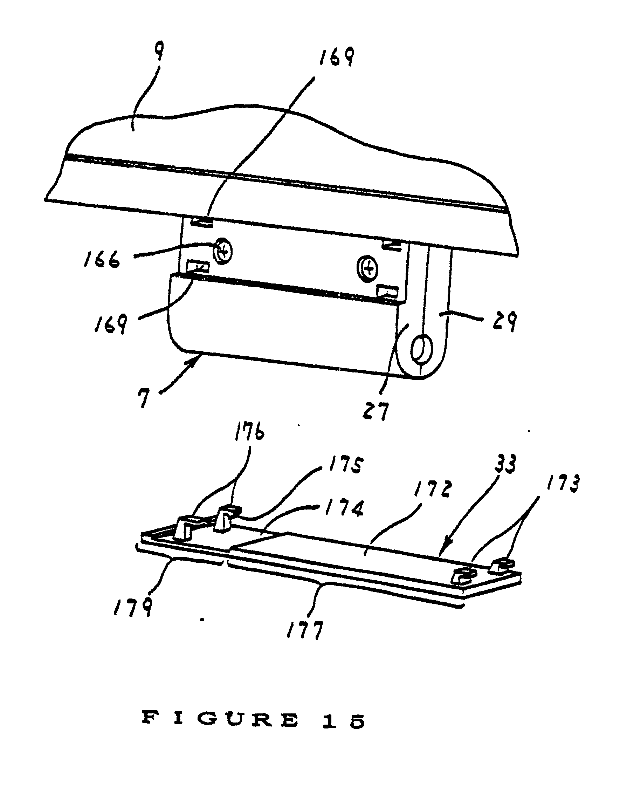

Figure 15 is perspective view of a display leg and a screw cover.

Inner case 27 includes a cover storing portion having through holes and engaging holes 169. Outer cover 29 has screw engaging portion. Inner cover 27 and outer cover 29 are engaged by screws 166. Removable cover 33 has a thick wall portion 177 and a thin wall portion 179. An inner surface 172 of thick portion 177 has a pair of supporting claws 173. An inner surface 174 of thin portion 179 has a pair of engaging claws 176 having an engaging hook portion 175.

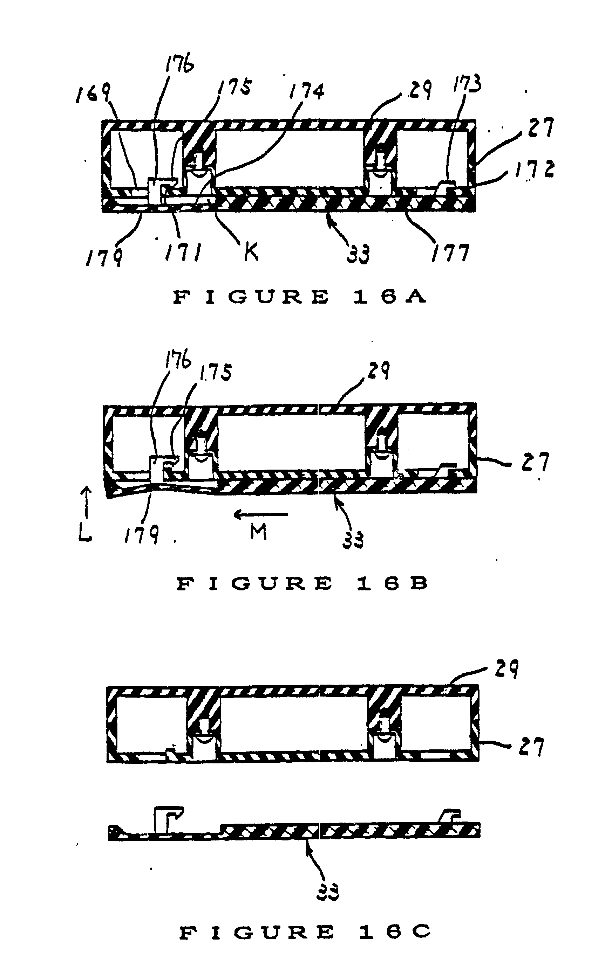

Figures 16A-16C are sectional views for explaining movement of the screw cover.

When screw cover is fixed on the cover storing portion, as shown in Figure 16A, a space K is formed between inner surface 174 of the cover and the flat surface 172 of the recessed portion. Engaging hook portions 175 are engaged with an inner surface of inner case 27. Supporting claws 173 are supported on the inner surface of inner case 27. When an operator pushes thin portion 179 in a direction of an arrow L, as shown in Figure 16B, thin portion 179 is elastically deformed. When thin portion 179 is bent, hook portions 175 are released from the inner surface of the cover storing portion. In this condition, if the operator slides cover 33 in a direction of an arrow M, cover 33 is released from inner case 27.

## Claims

1. A portable electronic apparatus comprising a base unit (3) and a handle assembly (15) which is displaceable between a storage position and a carrying position for carrying the apparatus, characterised in that the handle assembly comprises an elongate leg portion (45) pivotally secured at one end to the base unit and a handle (47) connected to the leg portion and displaceable relative thereto in the direction of the length of the leg portion, said handle assembly being pivotable between the carrying position and the storage position where the leg portion and the handle are stored in respective recesses (61, 62) in the base unit.

2. A portable electronic apparatus as claimed in claim 1, characterised in that, in the storage position, the handle (47) is closer to the pivot(43) than it is in the carrying position.

3. A portable electronic apparatus as claimed in claim 1 or 2, characterised in the provision of a latch mechanism (63) for releasably retaining the handle assembly in the storage position.

4. A portable electronic apparatus as claimed in claim 3, characterised in that the latch mechanism includes a latch displaceable between a position in which it retains the leg portion in the recess and a position in which the leg portion is released and spring means (77) for urging the leg portion from the recess when the leg portion is released.

5. A portable electronic apparatus comprising a base unit (3) having a keyboard (11) and at least one tilt leg assembly which, when in use, tilts the keyboard forwardly, characterised in that the or each tilt leg assembly includes a tilt leg (25) which is displacable between a first position in which it projects from the underside of the base unit to tilt the keyboard and a second position in which it is mainly in a storing compartment (67) in the base unit and the keyboard is not tilted; fixing means (109) for fixing the tilt leg in each of the positions and release (26) means for releasing the fixing means from the tilt leg to allow the tilt leg to be displaced from one position to the other.

6. A portableelectronic apparatus as claimed in claim 5, characterised in that the fixing means includes a member (109) which is biased into engagement with the tilt leg (25) to locate the tilt leg in either the first or second position, and the release means includes a switch (26) operable by the user from outside the base unit to release the member (109) from the tilt leg to permit the tilt leg to be displaced.

7. A portable electronic apparatus comprising a base unit (3) and first and second disk drives within the base unit, characterised in that one of the disk drives (23, 127) is mounted within a housing structure (121) which, in turn, is mounted in the base unit and the other disk drive (23, 127) is mounted on the housing structure (121) so that the disk drives are one above the other.

8. A portable electronic apparatus comprising a base unit (3) having a keyboard (11) with function keys (133) and character keys (135) separated by a wall, characterised in that the keyboard (11) is mounted on the base unit by means of a frame (13) which is secured to the base unit and overlies the keyboard, said frame having said wall (137) which has engaging claws (145) which engage with corresponding engaging grooves (143) in the keyboard when the frame overlies the keyboard so that the wall serves as a rigid partition between the function keys and the character keys.

9. A portable electronic apparatus comprising a base unit (3) defining an expansion card storing compartment (147) which has a removable cover (69), characterised in that the wall of the compartment and at least the inner surface of the cover (69) is electrically conducting and the cover carries an electrically conducting spring (157) which, in use, contacts an electrically conducting portion (165) on an expansion card (159) in the compartment to hold the expansion card firmly in the compartment and to connect the electrically conducting portion on the card to the electrically conducting wall of the storage compartment.

10. A portable electronic apparatus as claimed in claim 9, characterised in that the removable cover is of metal and is secured to an electrically conducting part of the base unit by one or more conducting screws.

11. A portable electronic apparatus having a recessed portion (27) arranged to be covered by a removable cover member (33), characterised in that the recessed portion provides a substantially flat surface (172) having two elongate slots (169) therein and the removable cover has two claws (173, 176) extending therefrom, said claws being arranged to enter said respective slots in a direction substantially nornal to the plane of the flat surface and then be moved in a direction parallel to the plane of the flat surface so that the cover closes off the recessed portion, one of the claws (176) having a hook portion (175) which hooks into its slot to lock the cover in the closed off position, said claw being mounted on an elastically deformable portion (179) of the cover whereby a user can deform said portion to release the hook portion from its slot and permit the cover to be removed from the recessed portion.

12. A portable electronic apparatus as claimed in claim 11, characterised in that the removable cover has a thin wall portion and a thicker wall portion, and said thin wall portion is the elastically deformable portion.

13. A portable electronic apparatus as claimed in claim 12, characterised in that, when saidcover closes off the recessed portion, the thin wall portion is spaced from the flat surface and the thin wall portion is deformed by pushing it towards the flat surface.

FIGURE 1

F I G U R E   2

45

D

53

49

51

II

II

47

FIGURE 3

55 57

51

59

47

FIGURE 4

**F I G U R E 5**

FIGURE 6A

FIGURE 6B

FIGURE 6C

FIGURE 7

FIGURE 8A

FIGURE 8B

FIGURE 8C

FIGURE 9

FIGURE 10

FIGURE 11

FIGURE 12

FIGURE 13

FIGURE 14

FIGURE 15

FIGURE 16A

FIGURE 16B

FIGURE 16C